# EUROPÄISCHE PATENTSCHRIFT

(11) **EP 1 730 059 B1**
(45) Veröffentlichungstag und Bekanntmachung des Hinweises auf die Patenterteilung: **14.10.2009**
(21) Anmeldenummer: 05735063.9
(22) Anmeldetag: 16.03.2005
(51) Int. Cl.: B65G 53/28, B65G 53/52

(54) **VORRICHTUNG UND VERFAHREN ZUR PNEUMATISCHEN FÖRDERUNG VON FE INTEILIGEN SCHÜ TTGÜTERN**
DEVICE AND METHOD FOR PNEUMATICALLY CONVEYING FINE PARTICLE BULK MATERIALS
DISPOSITIF ET PROCEDE POUR LE TRANSPORT PNEUMATIQUE DE MATIERES EN VRAC FINEMENT DIVISEES

(30) Priorität: 23.03.2004 DE 102004014058
(43) Veröffentlichungstag der Anmeldung: 13.12.2006
(73) Patentinhaber: Lanxess Deutschland GmbH & Co.KG, 51369 Leverkusen (DE)
(72) Erfinder: GRASSHOFF, Herbert, 47443 Moers (DE); VAN MULLEKOM, Robert, Hubertus, NL-5911 AL Venlo (NL); BIENMÜLLER, Matthias, 47803 Krefeld (DE); JOACHIMI, Detlev, 47800 Krefeld (DE); DE BOCK, Maarten, B-2920 Kalmthout (BE)
(86) Internationale Anmeldenummer: PCT/EP2005/002764
(87) Internationale Veröffentlichungsnummer: WO 2005/092745

(56) Entgegenhaltungen:
- DE-A1- 2 653 699
- US-A- 5 167 471
- US-A1- 2002 187 012

## Beschreibung

Die Erfindung betrifft eine Vorrichtung sowie ein Verfahren zur pneumatischen Förderung von feinteiligen Schüttgütern, beispielsweise geschnittenen Glasfasern für die Verstärkung von Kunststoffe gemäß dem Oberbegriff der Ansprüche 1, 5 und 6.

Glasfasern werden in großen Mengen in der Kunststoffherstellung - insbesondere für die Herstellung glasfaserverstärkter Kunststoffe - eingesetzt. Dabei ist für die Handhabung der Glasfasern, insbesondere der Transport und die Beschickung der Produktionsanlagen ein erheblicher Aufwand erforderlich. Der Platzbedarf für die Bevorratung der Glasfasergebinde ist erheblich.

Glasfasern für die Verstärkung von thermoplastischen Kunststoffe werden üblicherweise in Form von Faserbündeln, sogenannte Chopped Strands, verarbeitet. Die Faserbündel bestehen dabei beispielsweise aus 2000 Einzelfasern (Durchmesser der Einzelfasern: etwa 10 µm) mit einer typischen Länge von etwa 4,5 mm. In den gängigen Produktionsanlagen für glasfaserverstärkte Thermoplaste werden die geschnittenen Glasfasern z.B. auf einem Extruder mit dem geschmolzenen thermoplastischen Kunststoff und ggf. weiteren Additiven gemischt. Die Extruder müssen dabei mit erheblichen Mengen an geschnittenen Glasfasern versorgt werden.

Aus dem Stand der Technik bekannte Fördertechniken zur absatzweisen Beschickung/Befüllung von Produktionsanlagen mit geschnittenen Glasfasern sind Aufzuganlagen und Flurförderfahrzeuge, wie Gabelstapler oder Krananlage. Kontinuierliche Förderung kann z.B. über Becherwerke, Stetigförderer, Rüttel- bzw. Vibrationsrinnen oder Transportbänder erfolgen.

Nachteilig ist, dass diese Fördertechniken zum Teil sehr aufwendig sind und aufgrund ihrer Bauart und ihres Platzbedarfs nur schwer in bereits vorhandene Produktionsanlagen und deren Gebäudelogistik zu integrieren sind.

Ein Ausweg bietet der Einsatz von Anlagen zur pneumatischen Förderung von Schüttgütern, wie sie beispielsweise in EP 0 692 441 A beschrieben sind. Die in EP 0 692 441 A beschriebenen pneumatischen Förderanlagen arbeiten in sogenannten Saug-Druck-Zyklen, wobei im Saugzyklus die Anlage mit Schüttgut aus einem Aufgabebehälter teilbefüllt wird und im Druckzyklus das eingefüllte Material zum Zielort gefördert wird. Eine besondere Anordnung der Druckluftversorgung verhindert das Verstopfen solcher Anlagen.

In der Offenlegungsschrift DE 101 27 427 A wird eine Vorrichtung zu pneumatischen Förderung von feinteiligen Schüttgütern, insbesondere Glasfasern, beschrieben, die wenigstens einen Aufgabebehälter, ein pneumatisches Förderrohr mit einem ersten Abschnitt und einem zweiten Abschnitt, eine Saugfördereinrichtung für das Fördergas, die mit dem Ende des ersten Abschnitts des Förderrohrs verbunden ist, eine Druckfördereinrichtung für das Fördergas, eine Fördergasnebenleitung, mehrere Absperrarmaturen zwischen pneumatischem Förderrohr und Fördergasnebenleitung sowie eine Abgabestelle aufweist.

Die in DE 101 27 427 A beschriebene Vorrichtung hat im Gegensatz zu der in EP 0 692 441 A beschriebenen Vorrichtung nicht den Nachteil, dass in der Saug- bzw. Einfüllphase des Förderzyklus am Zielort auf die gesamte Vorrichtung Unterdruck erzeugt werden muss, sondern nur im ersten Abschnitt des Förderrohres. Ein weiterer Vorteil der in DE 101 27 427 A beschriebenen Vorrichtung sind das effizientere Betreiben der Förderanlage, weil die erste Phase (Einfüllen der Glasfasern in Abschnitt 1) und die dritte Phase des Förderzyklus (Fördern der Glasfasern in Abschnitt 2) gleichzeitig erfolgen kann. Ferner kann bei der aus DE 101 27 427 A bekannten Vorrichtung die Fördergeschwindigkeit besser kontrolliert werden.

Nachteilig an der aus DE 101 27 427 A bekannten Vorrichtung ist, dass die Bestückung der Fördervorrichtung mit feinteiligem Schüttgut mit Hilfe von Aufgabeeinrichtungen, wie Behälter, Silos, Bunker, erfolgt, in die das Schüttgut aus Schüttgut-Containerfahrzeugen oder Big-Bags (sackartige Gebinde, vorzugsweise aus Gewebe) eingefüllt wird. Derartige Aufgabeeinrichtungen haben einen hohen Raumbedarf, müssen installiert und instand gehalten werden, womit ein Material- und Kostenaufwand verbunden ist. Außerdem bedeutet die Benutzung von Aufgabebehältern, dass gewisse Schüttgutvorräte vorhanden sein müssen, was zu Beschränkungen in der Produktflexibilität und der Logistikeffizienz führen kann.

In EP 0 692 441 A wird die direkte Entleerung von Schüttgut-Containerfahrzeugen in die pneumatische Förderanlage mittels eines einfachen Aufgabetrichters erwähnt. Dies erfordert eine sehr genaue Abstimmung des Produktstrom aus dem Containerfahrzeug mit der Produktaufnahme der pneumatischen Förderanlage. Da solche Förderanlagen in Zyklen betrieben werden (Saug-Druck-Zyklen), wird die Schüttgutentnahme aus dem Aufgabetrichter regelmäßig unterbrochen, wodurch eine sichere Betriebsführung äußerst schwierig ist (Überlaufen der Trichter etc.).

Darüber hinaus sind, bedingt durch das Rieselverhalten von bestimmten Schüttgüter, insbesondere von geschnittenen Glasfasern, für eine effektive Entleerung von Schüttgut-Containern apparative Anpassungen an Standard-Schüttgut-Containern und deren Entleerungsröhre notwendig. Beispielhaft sei die Offenlegungsschrift GB 2 116 938 genannt, in der eine Anpassung von Standard-ISO-Containern in Kombination mit einem neuen Entleerungsrohr für die verbesserte Entleerung von trockenen Schüttgütern beschrieben ist. Die dort aufgeführten Anpassungen sind jedoch aufwändig und lassen sich nicht oder nur sehr schwierig mit den aus dem Stand der Technik bekannten pneumatischen Förderanlagen kombinieren.

Aus US 2002/187012 A1 ist eine Vorrichtung gemäß dem Oberbegriff des Anspruchs 1 bekannt mit der feinteilige Schüttgüter gefördert werden können deren pneumatisches Förderrohr an der Innenwand eine Härte von 50 bis 90 HRC aufweist.

Aufgabe der vorliegenden Erfindung ist es, eine Vorrichtung zur Förderung von feinteiligem Schüttgut, insbesondere Glasfasern, zur Verfügung zu stellen, welche direkt aus Schüttgutcontainern beschickt werden kann. Unter einer direkten Beschickung der Fördervorrichtung aus Schüttgutcontainern ist im Sinne der vorliegenden Erfindung die Beschickung aus einem Schüttgutcontainer ohne einer zwischengeschalteten Speichereinrichtung, wie Bunker, Kessel, Lagerraum, oder Aufgabeeinrichtung, wie Aufgabebehälter, Silo, Trichter, zu verstehen.

Gegenstand der Erfindung ist eine Vorrichtung zur pneumatischen Förderung von feinteiligen Schüttgütern, insbesondere Glasfasern, wenigstens bestehend aus
(i) einem Förderrohr (2) mit einer ersten Absperreinrichtung (15), welche das Förderrohr (2) in einen ersten Abschnitt (2a) zwischen einem ersten Ende des Förderrohrs (2) und der Absperreinrichtung (15) und in einen zweiten Abschnitt (2b) zwischen der Absperreinrichtung (15) und dem zweiten Ende des Förderrohrs (2) unterteilt,
(ii) einer Einfüllleitung (20), welche an ihrem ersten Ende eine Verbindungseinrichtung (21) für die Verbindung mit einem Schüttgutcontainer aufweist sowie an ihrem zweiten Ende mit dem ersten Ende des Förderrohrs (2) über eine zweite Absperreinrichtung (11) verbunden ist,
(iii) einer Abgabeeinrichtung (8), welche mit dem zweiten Ende des Förderrohrs (2) verbunden ist,
(iv) einer Druckfördereinrichtung (16), welche mit dem ersten Ende des Förderrohrs (2) mittels einer Absperreinrichtung (12) verbunden ist,
(v) einer Saugfördereinrichtung (3), welche mit dem ersten Abschnitt (2a) des Förderrohrs (2) mittels einer Absperreinrichtung (10) verbunden ist, dadurch gekennzeichnet, dass die Einfüllleitung (20) auch eine Ansaugeinrichtung (24) aufweist, die so angeordnet ist, dass der Abstand zwischen der Ansaugeinrichtung (24) und der Absperreinrichtung (11) ein Drittel bis zwei Drittel der Länge der Einfüllleitung (20) beträgt.

Bei dem Förderrohr handelt es sich vorzugsweise um ein Rohr mit einer Nennweite von 100 bis 200 mm und einer Länge von beispielsweise 5 bis 200 m. Das Rohr ist vorzugsweise in durchgehärtetem Stahl ausgeführt. Besonders bevorzugt weist das Förderrohr an der Innenwand eine Härte von 50 bis 90 HRC, besonders bevorzugt von 60 bis 65 HRC auf. Vorzugsweise ist das Förderrohr aus verschiedenen Segmenten zusammengesetzt, die beispielsweise über Flanschverbindungen verbunden sind. Zur schonenden Förderung der Fasern ist insbesondere auf eine vor- und rücksprungfreie Verlegung der Segmente des Förderrohrs zu achten.

Das Förderrohr ist mit einer ersten Absperreinrichtung ausgestattet, welche das Förderrohr in einen ersten Abschnitt zwischen einem ersten Ende des Förderrohrs und der ersten Absperreinrichtung und in einen zweiten Abschnitt zwischen der ersten Absperreinrichtung und dem zweiten Ende des Förderrohrs unterteilt. Die erste Absperreinrichtung kann prinzipiell an beliebiger Stelle entlang des Förderrohrs positioniert sein. Vorzugsweise ist sie so positioniert, dass der erste Abschnitt kürzer ist als der zweite Abschnitt. Besonders bevorzugt beträgt der Abstand zwischen dem ersten Ende des Förderrohres und der ersten Absperreinrichtung 3 bis 15 Meter.

Die Einfüllleitung kann ein Rohr, ein Schlauch oder eine Kombination daraus sein. Sie kann aus Metall, Kunststoff, z.B. Kautschuk, oder Kombinationen daraus sein. Sie kann einteilig oder aus mehreren Teilen bestehen. Beispielsweise kann die Einfüllleitung ein Rohr sein, welches abschnittsweise flexible Schläuche aufweist. Der Durchmesser der Einfüllleitung ist bevorzugt größer als der Durchmesser des Förderrohrs. Bevorzugt beträgt der Durchmesser der Einfüllleitung 200 bis 1000 mm.

Die Einfüllleitung der erfindungsgemäßen Vorrichtung, welche im Betrieb an ihrem ersten Ende an einen Schüttgutcontainer angeschlossen ist, ersetzt den Aufgabebehälter der aus DE 101 27 427 A bekannten pneumatischen Fördervorrichtung. Die Einfüllleitung weist an ihrem ersten Ende eine Verbindungseinrichtung für die Verbindung mit dem Schüttgutcontainer, insbesondere der Auslauföffnung des Schüttgutcontainers, auf. Die Verbindungseinrichtung kann eine Flansch-, Klemm- oder Schraubverbindung sein. Andererseits ist die Einfüllleitung an ihrem zweiten Ende mit dem Förderrohr der Fördervorrichtung über eine Absperreinrichtung, insbesondere einem Einlaufverschlussventil, verbunden.

Die Einfüllleitung weist erfmdungsgemäß eine Ansaugeinrichtung auf. Über die Ansaugeinrichtung wird mittels Unterdruck Luft in die Einfüllleitung eingesaugt. Die Ansaugeinrichtung kann auf beliebige Weise gestaltet sein. In einer einfachen Ausführungsform kann die Ansaugeinrichtung beispielsweise eine oder mehrere Öffnungen in der Einfüllleitung sein. Die Öffnungen können Löcher, Schlitze o.dgl. sein. Die Ansaugeinrichtung kann jedoch auch Hähne, Regelventile o.dgl. aufweisen.

Die Abgabeeinrichtung, welche mit dem zweiten Ende des Förderrohrs verbunden ist, kann beispielsweise nur zu Lager- oder Dosierzwecken oder aber als Einrichtung zur Weiterverarbeitung oder -Weiterförderung des feinteiligen Schüttguts selbst dienen. Sie kann z.B. die Vorlage für einen Extruder sein. Grundsätzlich sind als Abgabeeinrichtungen alle Behälter wie Container, Big-Bags (Gewebecontainer), Silos, Bunker, Lagerräume, Kessel, Auflieger für Lastkraftwagen, Reaktions- oder Weiterverarbeitungskessel, Extruder oder sonstige Behälter und Apparate geeignet. Die Abgabeeinrichtung ist bevorzugt über eine Absperreinrichtung mit dem zweiten Ende des Förderrohrs verbunden.

Als Saugfördereinrichtung sind beliebige Maschinen zur Erzeugung von Unterdruck für Gase geeignet. Vorzugsweise wird ein Gebläse oder ein Ventilator eingesetzt. Die Saugfördereinrichtung ist mit dem ersten Abschnitt des Förderrohrs mittels einer Absperreinrichtung verbunden. Im Betrieb der erfindungsgemäßen Vorrichtung saugt sie feinteilige Schüttgüter aus der Einfüllleitung in den ersten Abschnitt des Förderrohrs. Um eine möglichst große Menge an Schüttgut anzusaugen, wird die Saugfördereinrichtung im Bereich des zweiten Endes des ersten Förderrohrabschnitts angebracht. Dies bedeutet, dass die Saugfördereinrichtung in Förderrichtung bevorzugt im Bereich nahe vor der ersten Absperreinrichtung positioniert ist.

Als Druckfördereinrichtung sind beliebige Maschinen zur Erzeugung von Überdruck für Gase geeignet. Vorzugsweise wird ein Gebläse, ein Ventilator, ein Verdichter oder ein Kompressor eingesetzt. Die Druckfördereinrichtung ist im Bereich des ersten Endes des ersten Abschnitts des Förderrohrs positioniert. Im Betrieb der erfindungsgemäßen Vorrichtung drückt sie die im ersten Abschnitt des Förderrohrs befindlichen feinteiligen Schüttgüter in den zweiten Abschnitt des Förderrohrs.

Die erfindungsgemäße Vorrichtung erlaubt das Beschicken der pneumatischen Fördervorrichtung mit feinteiligen Schüttgütern direkt aus einem mobilen Schüttgutcontainer, ohne dass im Betrieb der Fördervorrichtung ein Zwischenspeicher und/oder eine Aufgabeeinrichtung zwischen den Schüttgutcontainer und das Förderrohr geschaltet ist. Mittels der Ansaugeinrichtung wird ein Verstopfen der Einfüllleitung beim Beschicken mit feinteiligem Schüttgut verhindert. Die direkte Verbindung des Förderrohres der Fördervorrichtung mit dem Schüttgutcontainer über die Einfüllleitung erlaubt eine effiziente Logistik, bei der beispielsweise mit Hilfe eines LKW ein mit feinteiligem Schüttgut, insbesondere Glasfasern, gefüllten Schüttgutcontainer angeliefert wird, der Schüttgutcontainer mittels der erfindungsgemäßen Einfüllleitung an die Fördervorrichtung angeschlossen wird und der entleerte Schüttgutcontainer wieder z.B. mittels LKW abtransportiert wird.

Als Schüttgutcontainer sind übliche Schüttgutcontainer z.B. Drucklos-Silocontainer der Fa. Hoyer-Talke, Deutschland, geeignet. Bevorzugt sind im Bereich der Auslassöffnung des Schüttgutcontainers Schotten vorgesehen, die im gekippten Zustand des Schüttgutcontainers eine vollständige Entleerung gewährleisten. Besonders bevorzugt weisen die Schotten einen Neigungswinkel von mindestens 45° auf. Vorzugsweise ist der Schüttgutcontainer, insbesondere niederschlagsdicht, mit einer freien Be- und Entlüftung ausgestattet.

Weiterhin ist die Auslauföffnung des Schüttgutcontainers über eine Absperreinrichtung schließbar. Bevorzugt ist die Absperreinrichtung ein Schieber. Ferner hat die Auslauföffnung vorzugsweise einen inneren Durchmesser von wenigstens 100 mm.

Als Fahrzeuge für Schüttgutcontainer sind Auflieger für Lastkraftwagen und Schienenfahrzeuge geeignet. Bevorzugt sind Auflieger für Lastkraftwagen.

Bevorzugte feinteilige Schüttgüter, welche mit der erfindungsgemäßen Vorrichtung gefördert werden können, sind Glasfasern. Die Glasfasern können beispielsweise als Flocke aus ca. 2000 Fasern mit einer Länge von 4,5 mm und etwa 0,5 mm Durchmesser vorliegen. Der Einzelfaserdurchmesser ist ca. 10 µm.

Eine besonders bevorzugte Ausführungsform ist eine Vorrichtung zur pneumatischen Förderung von feinteiligen Schüttgütern, insbesondere Glasfasern, besteht wenigstens aus
(I) einem Hauptförderrohr (17), welches an seinem ersten Ende über jeweils eine Absperreinrichtung (15A, 15B, 15C) mit dem zweiten Ende eines Zufuhrförderrohrs (7A, 7B, 7C) verbunden ist,
(II) einer oder mehreren Einfüllleitungen (20), welche jeweils eine Ansaugeinrichtung (24) und jeweils an ihrem ersten Ende eine Verbindungseinrichtung (21) für die Verbindung mit einem Schüttgutcontainer aufweisen sowie jeweils an ihrem zweiten Ende über eine Absperreinrichtung (11A, 11B, 11C) mit einem ersten Ende der Zufuhrförderrohre (7A, 7B, 7C) verbunden sind,
(III) einer oder mehreren Abgabeeinrichtungen (8A, 8B 8C), welche jeweils über eine Absperreinrichtung (18A, 18B, 18C) mit dem Hauptförderrohr (17) verbunden sind,
(IV) einer dem Hauptförderrohr (17) und den Zuführförderrohren (7A, 7B, 7C) parallel geschalteten Fördergasnebenleitung (4), welche durch eine Vielzahl von Verbindungsleitungen (5) mit dem Hauptförderrohr (17) und den Zufuhrförderrohren (7A, 7B, 7C) verbunden ist,
(V) einer Saugfördereinrichtung (3), welche jeweils mit dem zweiten Ende der Zufuhrförderrohre (7A, 7B, 7C) mittels Absperreinrichtungen (10A, 10B, 10C) verbunden ist,
(VI) einer Druckfördereinrichtung (16), welche mit dem ersten Ende der Zuführförderrohre (7A, 7B, 7C) mittels Absperreinrichtung (12A, 12B, 12C) und mit der Fördergasnebenleitung (4) mittels einer Absperreinrichtung (13) und mit dem ersten Ende des Hauptförderrohrs (17) mittels einer Absperreinrichtung (14) verbunden ist,
(VII) Absperreinrichtungen in den Verbindungsleitungen.

Das Hauptförderrohr ist vorzugsweise länger als die einzelnen Zuführförderrohre. Die Vorrichtung kann im Wesentlichen mit einer beliebigen Anzahl von Zufuhr- und Abfuhrförderrohren gestaltet werden. Jedes der Zufuhrförderrohre kann über eine, insbesondere lösbare, Verbindung mit der Einfüllleitung verbunden sein. Die Abgabeeinrichtungen können entweder direkt über eine Absperreinrichtung, z.B. eine Rohrweiche und/oder ein Ventil, mit dem Hauptförderrohr verbunden sein oder über ein Abfuhrförderrohr, welches eine Absperreinrichtung aufweist. Ist die Abgabeeinrichtung über ein Abfuhrförderrohr mit dem Hauptförderrohr verbunden, kann dieses prinzipiell von beliebiger Länge sein. Die Zufuhrförderrohre und Abfuhrförderrohre sind insbesondere mittels Rohrweichen an das Hauptförderrohr angeschlossen.

Als Fördergasnebenleitung ist grundsätzlich jede einfache Rohrleitung geeignet, die ebenfalls vorzugsweise aus verschiedenen Segmenten zusanunengesetzt sein kann, die beispielsweise über Flanschverbindungen verbunden sind. Die Nebenleitung ist endständig verschlossen oder schließbar, damit sich in der Nebenleitung Druck aufbauen kann.

Die Fördergasnebenleitung ist mit dem Hauptförderrohr, den Zufuhrförderrohren sowie ggf. den Abfuhrförderrohren parallel geschaltet. Sie ist mit den Förderrohren durch eine Vielzahl von Verbindungsleitungen, beispielsweise in Form von kurzen Rohrstücken, verbunden. Die Verbindungsleitungen tragen Absperreinrichtungen. Der Abstand zwischen zwei benachbarten Verbindungsleitungen beträgt vorzugsweise 200 bis 2000 mm.

Die Saugfördereinrichtung ist jeweils mit dem zweiten Ende eines Zufuhrförderrohrs absperrbar verbunden, wobei das erste Ende eines Zufuhrförderrohrs mit einer Einfüllleitung verbunden ist.

Sowohl die Zufuhr- und ggf. Abfuhrförderrohre als auch das Hauptförderrohr und die Fördergasnebenleitung sind über eine Rohrleitung mit einem Anschluss für das Fördergas verbunden, das mit dem gewünschten Vordruck zur Verfügung steht. Die Druckfördereinrichtung ist jeweils mit dem ersten Ende eines Zufuhrförderrohrs und dem ersten Ende des Hauptförderrohrs absperrbar mittels einer Absperreinrichtung verbunden.

Alle Einrichtungen der erfindungsgemäßen Vorrichtung, z.B. die Saug- und Druckfördereinrichtung sowie die Abgabeeinrichtungen, können zur Vermeidung von Kontamination der Umgebung (mit Glasfaserstaub) mit einer Filtration versehen werden. Hierzu werden z.B. selbstreinigende Filtereinrichtungen verwendet.

Bei den Absperreinrichtungen handelt es sich insbesondere um Hähne, Rohrweichen oder Ventile, bevorzugt Quetschventile. An beiden Enden der Zufuhrförderrohre, das heißt zwischen der Aufgabeeinrichtung und dem jeweiligen Zufuhrförderrohr sowie zwischen dem jeweiligen Zufuhrförderrohr und dem Hauptförderrohr sind bevorzugt Quetschventile vorgesehen.

Die Absperreinrichtungen in den Verbindungsleitungen sind bevorzugt zweistufig ausgebildet, wobei die erste Stufe mit dem Hauptförderrohr, den Zufuhrförderrohren und/oder den Abfuhrförderrohren verbunden ist und rückschlagsichernd gegenüber erhöhtem Druck im Hauptförderrohr ausgebildet ist. Außerdem ist die zweite Stufe der Absperreinrichtungen bevorzugt mit der Fördergasnebenleitung verbunden und als Einlassventil mit Druckvoreinstellung ausgebildet.

Weiterer Gegenstand der Erfindung ist ein Verfahren zur Förderung von feinteiligem Schüttgut unter Verwendung der erfindungsgemäßen Vorrichtung, wobei das Verfahren durch die folgenden Schritte gekennzeichnet ist:
(a) Verbinden der Einfüllleitung (20) mit einem Schüttgutcontainer (30) mittels der Verbindungseinrichtung (21) und Öffnen einer Absperreinrichtung (22)
(b) Öffnen der Ansaugeinrichtung (24)
(c) Öffnen der Absperreinrichtungen (11) und (10)
(d) Ansaugen von Schüttgut aus der Einfüllleitung (20) in den ersten Abschnitt (2a) des Förderrohrs (2) mittels der Saugfördereinrichtung (3)
(e) Schließen der Absperreinrichtungen (11) und (10)
(f) Öffnen der Absperreinrichtungen (12) und (15)
(g) Fördern des in Schritt (d) in den ersten Abschnitt (2a) des Förderrohrs (2) angesaugten Schüttguts in den zweiten Abschnitt (2b) des Förderrohrs (2) mittels der Druckfördereinrichtung (16)
(h) Schließen der Absperreinrichtungen (12) und (15).

Das erfindungsgemäße Verfahren kann einfach oder mehrfach ausgeführt werden. Vorzugsweise wird es mehrfach ausgeführt. Dabei schließt sich an Schritt (h) unmittelbar der Schritt (c) an, so dass die Schritte (c) bis (h) zyklisch durchlaufen werden.

Ein weiterer Gegenstand der Erfindung ist ein Verfahren zur Förderung von Glasfasern unter Verwendung der erfindungsgemäßen Vorrichtung, wobei das Verfahren durch die folgenden Schritte gekennzeichnet ist:
(a) Transport von Glasfasern in einem Schüttgutcontainer (30)
(b) Verbinden der Einfüllleitung (20) mit dem Schüttgutcontainer (30) mittels der Verbindungseinrichtung (21) und Öffnen einer Absperreinrichtung (22)
(c) Öffnen der Ansaugeinrichtung (24)
(d) Öffnen der Absperreinrichtungen (11) und (10)
(e) Ansaugen von Schüttgut aus der Einfüllleitung (20) in den ersten Abschnitt (2a) des Förderrohrs (2) mittels der Saugfördereinrichtung (3)
(f) Schließen der Absperreinrichtungen (11) und (10)
(g) Öffnen der Absperreinrichtungen (12) und (15)
(h) Fördern des in Schritt (d) in den ersten Abschnitt (2a) des Förderrohrs (2) angesaugten Schüttguts in den zweiten Abschnitt (2b) des Förderrohrs (2) mittels der Druckfördereinrichtung (16)
(i) Schließen der Absperreinrichtungen (12) und (15).

Vorzugsweise werden die Verfahrensschritte mehrfach ausgeführt. Dabei schließt sich an Schritt (i) unmittelbar der Schritt (d) an, so dass die Schritte (d) bis (i) zyklisch durchlaufen werden.

Die Erfindung wird anhand der beigefügten Zeichnungen näher erläutert. Es zeigen:
- Figur 1: eine schematische Darstellung einer Ausführungsform der erfindungsgemäßen Vor- richtung zur pneumatischen Förderung von feinteiligen Schüttgütern
- Figur 2: eine schematische Darstellung einer Ausführungsform einer Einfüllleitung der keinen teil der erfindungsgemäß en Fördervorrichtung bildet
- Figur 3: einen Ausschnitt aus einer schematischen Darstellung einer weiteren Ausführungs- form der erfmdungsgemäßen Fördervorrichtung.

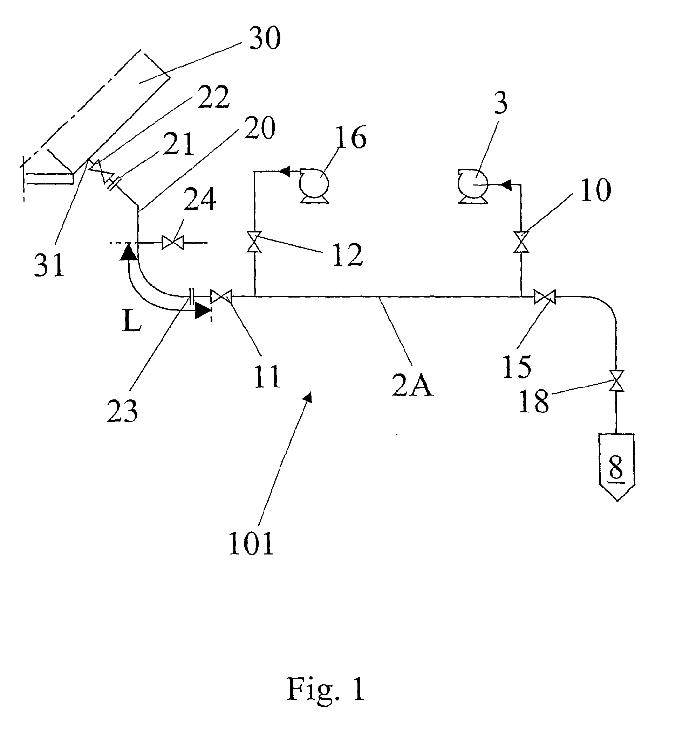

Figur 1 zeigt schematisch eine Vorrichtung 101 zur Förderung von feinteiligem Schüttgut. Das Förderrohr 2 trägt eine Absperreinrichtung 15, welche das Förderrohr 2 in einen ersten Abschnitt 2a und einen zweiten Abschnitt 2b unterteilt. Der erste Abschnitt 2a ist an seinem ersten Ende über eine Absperreinrichtung 11 mit einer Einfüllleitung 20 verbunden. An dem zweiten Ende des Abschnitts 2a befindet sich die Absperreinrichtung 15. Der zweite Abschnitt 2b trägt an seinem ersten Ende die Absperreinrichtung 15 und ist an seinem zweiten Ende mit einer Abgabeeinrichtung 8 über eine Absperreinrichtung 18 verbunden.

Das erste Ende des Förderrohrs 2, d.h. das erste Ende des ersten Förderrohrabschnitts 2a, ist mit einer Druckfördereinrichtung 16 verbunden. Außerdem ist der erste Abschnitt 2a mit einer Saugfördereinrichtung 3 verbunden. Vorzugsweise ist diese im Bereich des zweiten Endes des ersten Abschnitts 2a, d.h. im Bereich der Absperreinrichtung 15 positioniert. Die Druckfördereinrichtung 16 und die Saugfördereinrichtung 3 sind jeweils über eine Absperreinrichtung 12 bzw. 10 mit dem Förderrohr 2 verbunden.

Die Einfüllleitung 20 ist an ihrem ersten Ende mittels einer Verbindungseinrichtung 21 über eine Absperreinrichtung 22, z.B. ein Verschlussventil, vorzugsweise einen Schieber, mit der Auslassöffnung 31 eines Schüttgutcontainers 30 (ausschnittsweise dargestellt) verbunden. Das zweite Ende der Einfüllleitung 20 ist über die Absperreinrichtung 11, z.B. einem Einlaufverschlussventil, mit dem ersten Ende des Förderrohrs 2 verbunden. Die Verbindung erfolgt über eine Verbindungseinrichtung 23, z.B. einer Flansch-, Klemm- oder Schraubverbindung. Die Einfüllleitung 20 weist eine Ansaugeinrichtung 24 auf.

Die Ansaugeinrichtung 24 in der Einfüllleitung 20 besteht in der dargestellten Ausführungsform aus einem Regelventil, welches entweder permanent oder während eines Saugzyklus so weit geöffnet ist, dass eine problemlose Förderung des Schüttgutes (nicht dargestellt) in der Einfüllleitung 20, d.h. ohne Verstopfung, möglich ist.

Der Abstand L der Ansaugeinrichtung 24 von der Absperreinrichtung 11 ist so gewählt, dass in Abhängigkeit von der Auslegung der erfindungsgemäßen Vorrichtung ausreichend hohe Durchsätze realisiert werden.

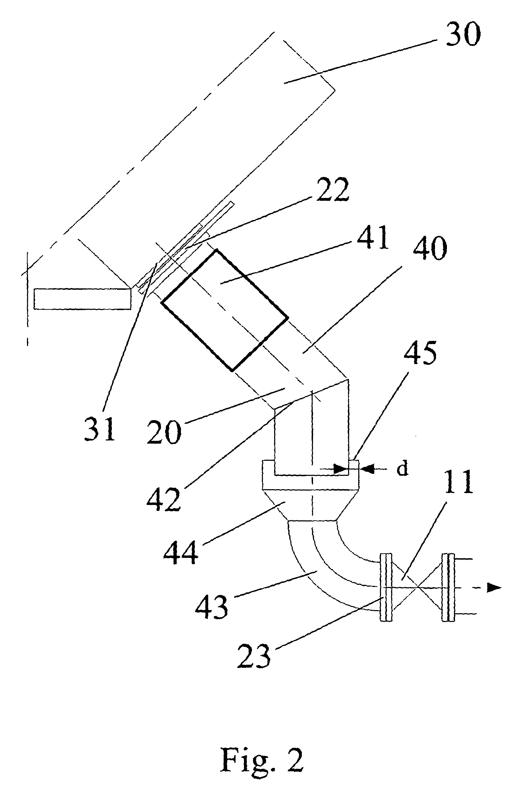

Figur 2 stellt eine Ausführungsform einer Einfüllleitung 20 dar. Die Einfüllleitung 20 besteht in dieser Ausführungsform aus zwei Abschnitten 40, 43. Der erste Abschnitt 40 besteht aus einem Metall- oder Kunststoffrohr, welches an einem ersten Ende, gegebenenfalls über ein flexibles Leitungsstück 41 aus Kunststoff, z.B. Kautschuk, mittels Flansch-, Klemm- oder Schraubverbindung (nicht dargestellt) mit der Auslassöffnung 31 des Schüttgutcontainers 30 (ausschnittsweise dargestellt) verbunden ist. Die Auslassöffnung 31 des Schüttgutcontainers 30 ist vorzugsweise mittels Schieber 22 schließbar. Um das Anschließen der Einfüllleitung 20 mit dem Schüttgutcontainer 30 zu vereinfachen, kann der erste Abschnitt ggf. einen Winkel 42 aufweisen. Der zweite Abschnitt 43 besteht ebenfalls aus einem Metall- oder Kunststoffrohr, welches an einem ersten Ende, gegebenenfalls über ein flexibles Leitungsstück (nicht dargestellt) aus Kunststoff, z.B. Kautschuk, mittels Flansch-, Klemm- oder Schraubverbindung 23 über eine Absperreinrichtung 11, z.B. einem Einlaufverschlussventil, mit einem ersten Ende eines Förderrohrs 2 (siehe Figur 1) verbunden ist.

Der Anschluss der beiden Abschnitte 40, 43 erfolgt durch eine Verbindung der jeweils zweiten Enden der Leitungsabschnitte 40, 43. Die Verbindung ist bevorzugt so gestaltet, dass sich eine ringförmige Öffnung 45 zwischen den beiden Abschnitten 40, 43 befindet. Über diese ringförmige Öffnung 45 wird während eines Saugzyklus, d.h. eines Einfüllzyklus, der pneumatischen Fördervorrichtung 101 (Figur 1) Luft angesaugt. Bei einem Saugzyklus wird Unterdruck in dem zweiten Abschnitt 43 erzeugt, wodurch das sich in Abschnitt 43 befindliche Schüttgut (nicht dargestellt) in das Förderrohr 2 der erfindungsgemäßen Vorrichtung 101 (siehe Figur 1) gesaugt wird. Gleichzeitig wird frisches Schüttgut aus Abschnitt 40 sowie Luft von außen durch die ringförmige Öffnung 45 in den Abschnitt 43 der Einfüllleitung 20 eingespeist. Die Einspeisung von Luft durch die Öffnung 45 verhindert, dass sich ein zu großer Unterdruck in dem Abschnitt 40 bildet und deswegen ein zu großer Druck auf das Schüttgut in dem Abschnitt 40 und/oder dem Schüttgutcontainer 30 erzeugt wird. Dies ist ein wesentlicher Aspekt, da bestimmte feinteilige Schüttgüter, insbesondere geschnittene Glasfasern, sehr stark zu Verstopfung neigen, wenn ein zu großer Förderdruck ausgeübt wird.

Der Durchmesser der beiden Abschnitte 40, 43 der Einfüllleitung 20 sowie der Durchmesser des Förderrohrs 2 (Figur 1) können gleich oder verschieden sein. Sind die Durchmesser verschieden, kann z.B. ein Übergangsstück 44 zwischen den Leitungsabschnitten 40, 43 vorgesehen sein, um die Durchmesser einander anzupassen. Das Übergangsstück kann beliebig geformt sein, z.B. geradlinig, gewinkelt, gekrümmt oder gebogen.

Bevorzugt wird die ringförmige Öffnung 45 zwischen den Abschnitten 40, 43 dadurch gebildet, dass die Abschnitte 40, 43 an ihren jeweils zweiten Enden, d.h. an den miteinander verbundenen Enden, einen unterschiedlichen Durchmesser aufweisen. Bevorzugt ist dabei der Durchmesser des Abschnitts 40 kleiner als der Durchmesser des Abschnitts 43. Besonders bevorzugt beträgt der Unterschied der Durchmesser an der Verbindungsstelle der Abschnitte 40, 43 10 bis 20 mm.

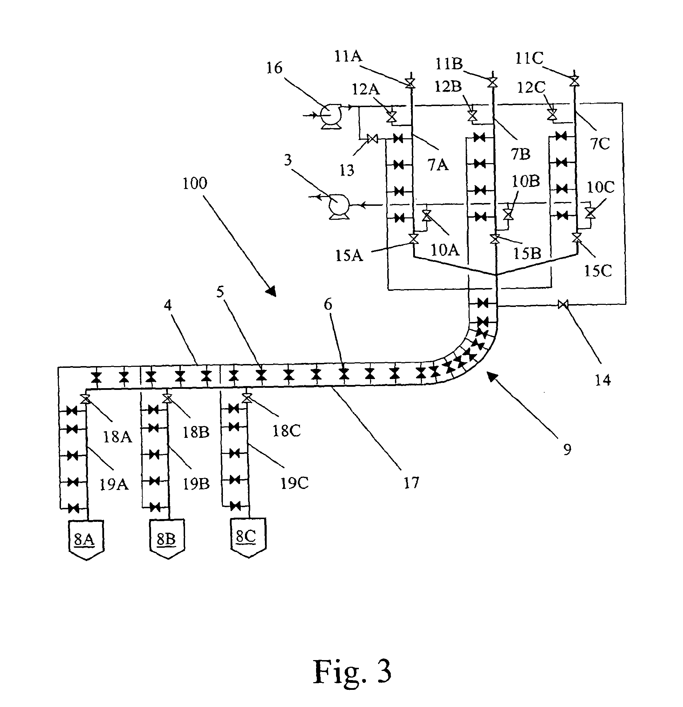

Figur 3 zeigt schematisch eine bevorzugte Ausführungsform der erfindungsgemäßen Vorrichtung 100 zur pneumatischen Förderung von feinteiligen Schüttgütern, insbesondere geschnittenen Glasfasern, wobei die Einfüllleitung, welche den Schüttgutcontainer mit der Fördervorrichtung verbindet, nicht dargestellt ist. In der dargestellten Ausführungsform besitzt die Vorrichtung drei Zufuhrförderrohre 7A, 7B, 7C sowie drei Abführförderrohre 19A, 19B, 19C, welche jeweils an das Hauptförderrohr 17 angeschlossen sind. Dabei ist jeweils das erste Ende der Zufuhrförderrohre 7A, 7B, 7C über eine Absperreinrichtung 11A, 11B, 11C mit einer Einfüllleitung 20 (siehe Fig. 2) verbunden. Jeweils das erste Ende der Abfuhrförderrohre 19A, 19B, 19C ist mit jeweils einer Abgabeeinrichtung 8A, 8B, 8C verbunden. Das jeweils zweite Ende der Zufuhrförderrohre 7A, 7B, 7C ist mit dem ersten Ende des Hauptförderrohres 17 und das jeweils zweite Ende der Abfuhrförderrohre 19A, 19B, 19C mit dem zweiten Ende des Hauptförderrohres 17 verbunden.

Die Zufuhrförderrohre 7A, 7B, 7C tragen neben den Absperreinrichtungen 11A, 11B, 11C die Absperreinrichtungen 15A, 15B, 15C, die Abfuhrförderrohre 19A, 19B, 19C die Absperreinrichtungen 18A, 18B, 18C.

Eine Fördergasnebenleitung 4 ist dem Hauptförderrohr 17 sowie den Zufuhrförderrohren 7A, 7B, 7C und Abführförderrohren 19A, 19B, 19C parallel geschaltet und über Verbindungsleitungen 5 mit Absperreinrichtungen 6 verbunden.

Eine Saugfördereinrichtung 3 ist jeweils mit dem zweiten Ende eines Zufuhrförderrohrs 7A, 7B, 7C absperrbar verbunden. Außerdem ist eine Druckfördereinrichtung 16 jeweils mit dem ersten Ende eines Zufuhrförderrohrs 7A, 7B, 7C und dem ersten Ende des Hauptförderrohrs 17 absperrbar verbunden.

Die Vorrichtung 100 wird beispielsweise wie folgt betrieben:
Die zu fördernden, geschnittenen Glasfasern (nicht dargestellt) befinden sich in einem Schüttgutcontainer 30 (siehe Figur 2). Alle Absperreinrichtungen, z.B. Hähne, sind geschlossen. Absperreinrichtung 13 sowie eine der Absperreinrichtungen 18A, 18B, 18C werden geöffnet, damit das Hauptförderrohr 17 mit mindestens einem der Abgabebehälter 8A, 8B, 8C in Verbindung steht.

In einem ersten Schritt werden die Absperreinrichtungen 10A und 11A geöffnet und mittels des Gebläses 3 eine Portion von z.B. ca. 150 kg der geschnittenen Glasfasern innerhalb von z.B. 1 min aus der Einfüllleitung 20 in das pneumatische Zufuhrförderrohr 7A gesaugt. Die Hähne 10A und 11A werden geschlossen.

In einem zweiten Schritt werden die Hähne 12A und 15A geöffnet und die im ersten Schritt in das Zufuhrförderrohr 7A geförderte Portion an geschnittenen Glasfasern innerhalb von z.B. 20 sec durch das Fördergas in das Hauptförderrohr 17 mittels der Druckförderung 16 gefördert. Als Fördergas wird Druckluft verwendet. Der Druck der Druckluft wird durch das Gebläse 16 aufgebaut. Die Hähne 12A und 15A werden geschlossen, der Hahn 13 bleibt geöffnet, um die Fördergasnebenleitung 4 mit Druckluft zu versorgen.

In einem dritten Schritt wird der Hahn 14 geöffnet. Die im zweiten Schritt in das Hauptförderrohr 17 geförderte Aufgabeportion an geschnittenen Glasfasern wird nun mit Hilfe der Druckluft durch das Hauptförderrohr 17 bis zu einer der Abgabestellen 8A, 8B, 8C gefördert, je nachdem, welcher Hahn 18A, 18B, 18C geöffnet ist. Die Förderung erfolgt innerhalb von z.B. 2 min. Die Druckluftmenge ist auf 200 m³/h unter Normalbedingungen eingestellt, was einer Gasleerrohrgeschwindigkeit von ca. 5 m/s entspricht. Anschließend wird Hahn 14 geschlossen.

Während des dritten Schritts eines Förderzyklus wird bereits der erste Schritt des nächsten Förderzyldus ausgeführt.

Im Falle einsetzender oder auftretender Verstopfungen öffnen die Absperreinrichtungen 6, die im Bereich der Zufuhrförderrohre 7A, 7B, 7C und Abfuhrförderrohre 19A, 19B, 19C sowie des Hauptförderrohres 17 über kurze Rohrstücke 5 mit der Fördergasnebenleitung 4 verbunden sind. Dadurch wird die Förderung der Aufgabeportion der geschnittenen Glasfasern hinter der einsetzenden oder auftretenden Verstopfung aufrecht erhalten. Durch die eintretende Druckluft aus der Fördergasnebenleitung 4 werden die einsetzenden oder auftretenden Verstopfungen gelockert und schließlich aufgelöst.

Im Bereich 9 des Hauptförderrohres 17 ist beispielhaft eine Krümmung des Förderrohrs gezeigt, in der die Gefahr einer Verstopfung erhöht ist.

## Patentansprüche

1. Vorrichtung zur pneumatischen Förderung von feinteiligen Schüttgütern, insbesondere Glasfasern, wenigstens bestehend aus
(i) einem Förderrohr (2) mit einer ersten Absperreinrichtung (15), welche das Förderrohr (2) in einen ersten Abschnitt (2a) zwischen einem ersten Ende des Förderrohrs (2) und der ersten Absperreinrichtung (15) und in einen zweiten Abschnitt (2b) zwischen der ersten Absperreinrichtung (15) und dem zweiten Ende des Förderrohrs (2) unterteilt,
(ii) einer Einfüllleitung (20), welche an ihrem ersten Ende eine Verbindungseinrichtung (21) für die Verbindung mit einem Schüttgutcontainer aufweist sowie an ihrem zweiten Ende mit dem ersten Ende des Förderrohrs (2) über eine zweite Absperreinrichtung (11) verbunden ist,
(iii) einer Abgabeeinrichtung (8), welche mit dem zweiten Ende des Förderrohrs (2) verbunden ist,
(iv) einer Druckfördereinrichtung (16), welche mit dem ersten Ende des Förderrohrs (2) mittels einer Absperreinrichtung (12) verbunden ist,
(v) einer Saugfördereinrichtung (3), welche mit dem ersten Abschnitt (2a) des Förderrohrs (2) mittels einer Absperreinrichtung (10) verbunden ist,
**dadurch gekennzeichnet, dass** die Einfüllleitung (20) auch eine Ansaugeinrichtung (24) aufweist, die so angeordnet ist, dass der Abstand (L) zwischen der Ansaugeinrichtung (24) und der zweiten Absperreinrichtung (11) ein Drittel bis zwei Drittel der Länge der Einfüllleitung (20) beträgt.

2. Vorrichtung nach Anspruch 1, **dadurch gekennzeichnet, dass** die Ansaugeinrichtung (24) eine Öffnung (45) in der Einfüllleitung (20) ist.

3. Vorrichtung nach einem der Ansprüche 1 oder 2, **dadurch gekennzeichnet, dass** die Verbindungseinrichtung (21) eine Flansch-, Klemm- oder Schraubverbindung aufweist.

4. Vorrichtung nach einem der Ansprüche 1-3, **dadurch gekennzeichnet, dass** die Vorrichtung wenigstens besteht aus
(I) einem Hauptförderrohr (17), welches an seinem ersten Ende über jeweils eine Absperreinrichtung (15A, 15B, 15C) mit dem zweiten Ende eines Zufuhrförderrohrs (7A, 7B, 7C) verbunden ist,
(II) einer oder mehreren Einfüllleitungen (20), welche jeweils eine Ansaugeinrichtung (24) und jeweils an ihrem ersten Ende eine Verbindungseinrichtung (21) für die Verbindung mit einem Schüttgutcontainer aufweisen sowie jeweils an ihrem zweiten Ende über eine Absperreinrichtung (11A, 11B, 11C) mit einem ersten Ende der Zufuhrförderrohre (7A, 7B, 7C) verbunden sind, wobei der Abstand (L) zwischen der Ansaugeinrichtung (24) und der Absperreinrichtung (11A, 11B, 11C) ein Drittel bis zwei Drittel der Länge der Einfüllleitung (20) beträgt,
(III) einer oder mehreren Abgabeemnchtungen (8A, 8B, 8C), welche jeweils über eine Absperreinrichtung (18A, 18B, 18C) mit dem Hauptförderrohr (17) verbunden sind,
(IV) einer dem Hauptförderrohr (17) und den Zufuhrförderrohren (7A, 7B, 7C) parallel geschalteten Fördergasnebenleitung (4), welche durch eine Vielzahl von Verbindungsleitungen (5) mit dem Hauptförderrohr (17) und den Zufuhrförderrohren (7A, 7B, 7C) verbunden ist,
(V) einer Saugfördereinrichtung (3), welche jeweils mit dem zweiten Ende der Zufuhrförderrohre (7A, 7B, 7C) mittels Absperreinrichtungen (10A, 10B, 10C) verbunden ist,
(VI) einer Druckfördereinrichtung (16), welche mit dem ersten Ende der Zufuhrförderrohre (7A, 7B, 7C) mittels Absperreinrichtung (12A, 12B, 12C) und mit der Fördergasnebenleitung (4) mittels einer Absperreinrichtung (13) und mit dem ersten Ende des Hauptförderrohrs (17) mittels einer Absperreinrichtung (14) verbunden ist,
(VII) Absperreinrichtungen in den Verbindungsleitungen.

5. Verfahren zur Förderung von feinteiligem Schüttgut unter Verwendung einer Vorrichtung nach einem der Ansprüche 1-4, **dadurch gekennzeichnet, dass** in die Schritte:
(a) Verbinden der Einfüllleitung (20) mit einem Schüttgutcontainer (30) mittels der Verbindungseinrichtung (21) und Öffnen einer Absperreinrichtung (22)
(b) Öffnen der Ansaugeinrichtung (24)
(c) Öffnen der Absperreinrichtungen (11) und (10)
(d) Ansaugen von Schüttgut aus der Einfüllleitung (20) in den ersten Abschnitt (2a) des Förderrohrs (2) mittels der Saugfördereinrichtung (3)
(e) Schließen der Absperreinrichtungen (11) und (10)
(f) Öffnen der Absperreinrichtungen (12) und (15)
(g) Fördern des in Schritt (d) in den ersten Abschnitt (2a) des Förderrohrs (2) angesaugten Schüttguts in den zweiten Abschnitt (2b) des Förderrohrs (2) mittels der Druckfördereinrichtung (16)
(h) Schließen der Absperreinrichtungen (12) und (15) durchgeführt werden.

6. Verfahren zur Förderung von Glasfasern unter Verwendung einer Vorrichtung nach einem der Ansprüche 1-4, **dadurch gekennzeichnet, dass** die Schritte:
(a) Transport von Glasfasern in einem Schüttgutcontainer (30)
(b) Verbinden der Einfüllleitung (20) mit dem Schüttgutcontainer (30) mittels der Verbindungseinrichtung (21) und Öffnen einer Absperreinrichtung (22)
(c) Öffnen der Ansaugeinrichtung (24)
(d) Öffnen der Absperreinrichtungen (11) und (10)
(e) Ansaugen von Schüttgut aus der Einfüllleitung (20) in den ersten Abschnitt (2a) des Förderrohrs (2) mittels der Saugfördereinrichtung (3)
(f) Schließen der Absperreinrichtungen (11) und (10)
(g) Öffnen der Absperreinrichtungen (12) und (15)
(h) Fördern des in Schritt (d) in den ersten Abschnitt (2a) des Förderrohrs (2) angesaugten Schüttguts in den zweiten Abschnitt (2b) des Förderrohrs (2) mittels der Druckfördereinrichtung (16)
(i) Schließen der Absperreinrichtungen (12) und (15) durchgeführt werden.

## Claims

1. Device for pneumatically conveying fine-particle bulk materials, in particular glass fibres, at least comprising
(i) a conveying tube (2) with a first shut-off device (15), which subdivides the conveying tube (2) into a first section (2a) between a first end of the conveying tube (2) and the first shut-off device (15) and a second section (2b) between the first shut-off device (15) and the second end of the conveying tube (2),
(ii) a filling line (20), which has at its first end a connecting device (21) for the connection to a bulk material container and is connected at its second end to the first end of the conveying tube (2) by way of a second shut-off device (11),
(iii) a discharge device (8), which is connected to the second end of the conveying tube (2),
(iv) a pressure conveying device (16) which is connected to the first end of the conveying tube (2) by means of a shut-off device (12),
(v) a suction conveying device (3), which is connected to the first section (2a) of the conveying tube (2) by means of a shut-off device (10),
**characterized in that** the filling line (20) also has a suction device (24), which is arranged in such a way that the distance (L) between the suction device (24) and the second shut-off device (11) is one third to two thirds of the length of the filling line (20).

2. Device according to Claim 1, **characterized in that** the suction device (24) is an opening (45) in the filling line (20).

3. Device according to either of Claims 1 and 2, **characterized in that** the connecting device (21) comprises a flanged, clamped or screwed connection.

4. Device according to one of Claims 1-3, **characterized in that** the device comprises at least
(I) a main conveying tube (17), which is connected at its first end by way of a respective shut-off device (15A, 15B, 15C) to the second end of a feed conveying tube (7A, 7B, 7C),
(II) one or more filling lines (20), which respectively have a suction device (24) and respectively have at their first end a connecting device (21) for the connection to a bulk material container and are respectively connected at their second end by way of a shut-off device (11A, 11B, 11C) to a first end of the feed conveying tubes (7A, 7B, 7C), the distance (L) between the suction device (24) and the shut-off device (11A, 11B, 11C) being one third to two thirds of the length of the filling line (20),
(III) one or more discharge devices (8A, 8B, 8C), which are respectively connected by way of a shut-off device (18A, 18B, 18C) to the main conveying tube (17),
(IV) a conveying gas subsidiary line (4) arranged parallel to the main conveying tube (17) and the feed conveying tubes (7A, 7B, 7C), which conveying gas subsidiary line is connected by a multiplicity of connecting lines (5) to the main conveying tube (17) and the feed conveying tubes (7A, 7B, 7C),
(V) a suction conveying device (3), which is respectively connected to the second end of the feed conveying tubes (7A, 7B, 7C) by means of shut-off devices (10A, 10B, 10C),
(VI) a pressure conveying device (16), which is respectively connected to the first end of the feed conveying tubes (7A, 7B, 7C) by means of shut-off devices (12A, 12B, 12C) and to the conveying gas subsidiary line (4) by means of a shut-off device (13) and to the first end of the main conveying tube (17) by means of a shut-off device (14),
(VII) shut-off devices in the connecting lines.

5. Method for conveying fine-particle bulk materials by using a device according to one of Claims 1-4, **characterized in that** the steps:
(a) connecting the filling line (20) to a bulk material container (30) by means of the connecting device (21) and opening a shut-off device (22)
(b) opening the suction device (24)
(c) opening the shut-off devices (11) and (10)
(d) sucking bulk material out of the filling line (20) into the first section (2a) of the conveying tube (2) by means of the suction conveying device (3)
(e) closing the shut-off devices (11) and (10)
(f) opening the shut-off devices (12) and (15)
(g) conveying the bulk material sucked in in step (d) into the first section (2a) of the conveying tube (2) into the second section (2b) of the conveying tube (2) by means of the pressure conveying device (16)
(h) closing the shut-off devices (12) and (15) are carried out.

6. Method for conveying glass fibres using a device according to one of Claims 1-4, **characterized in that** the steps:
(a) transporting glass fibres in a bulk material container (30)
(b) connecting the filling line (20) to the bulk material container (30) by means of the connecting device (21) and opening a shut-off device (22)
(c) opening the suction device (24)
(d) opening the shut-off devices (11) and (10)
(e) sucking bulk material out of the filling line (20) into the first section (2a) of the conveying tube (2) by means of the suction conveying device (3)
(f) closing the shut-off devices (11) and (10)
(g) opening the shut-off devices (12) and (15)
(h) conveying the bulk material sucked into the first section (2a) of the conveying tube (2) in step (d) into the second section (2b) of the conveying tube (2) by means of the pressure conveying device (16)
(i) closing the shut-off devices (12) and (15) are carried out.

## Revendications

1. Dispositif de transport pneumatique de matière en fines particules en vrac, en particulier de fibres de verre, constitué d'au moins :
(i) un tube de transport (2) qui présente un premier dispositif de fermeture (15) qui divise le tube de transport (2) en un premier tronçon (2a) situé entre une première extrémité du tube de transport (2) et le premier dispositif de fermeture (15) et un deuxième tronçon (2b) situé entre le premier dispositif de fermeture (15) et la deuxième extrémité du tube de transport (2),
(ii) un conduit de remplissage (20) qui présente à sa première extrémité un dispositif de raccordement (21) qui assure le raccordement avec un récipient à matière en vrac et dont la deuxième extrémité est reliée à la première extrémité du tube de transport (2) par un deuxième dispositif de fermeture (11),
(iii) un dispositif d'extraction (8) relié à la deuxième extrémité du tube de transport (2),
(iv) un dispositif (16) de transport sous pression relié à la première extrémité du tube de transport (2) au moyen d'un dispositif de fermeture (12) et
(v) un dispositif aspirant de transport (3) relié au premier tronçon (2a) du tube de transport (2) au moyen d'un dispositif de fermeture (10),
**caractérisé en ce que**
le conduit de remplissage (20) présente également un dispositif aspirant (24) disposé de telle sorte que la distance (L) entre le dispositif aspirant (24) et le deuxième dispositif de fermeture (11) représente un tiers à deux tiers de la longueur du conduit de remplissage (20).

2. Dispositif selon la revendication 1, **caractérisé en ce que** le dispositif aspirant (24) est une ouverture (45) ménagée dans le conduit de remplissage (20).

3. Dispositif selon l'une des revendications 1 ou 2, **caractérisé en ce que** le dispositif de raccordement (21) présente un raccord en bride, un raccord serré ou un raccord vissé.

4. Dispositif selon l'une des revendications 1 à 3, **caractérisé en ce que** le dispositif est constitué d'au moins :
(I) un tube principal de transport (17) dont la première extrémité est reliée par un dispositif de fermeture (15A, 15B, 15C) respectif à l'extrémité de chaque tube de transport d'amenée (7A, 7B, 7C),
(II) un ou plusieurs conduits de remplissage (20) qui présentent chacun un dispositif aspirant (24) et à leur première extrémité un dispositif de raccordement (21) qui assure le raccordement avec un récipient à matière en vrac, et dont la deuxième extrémité est reliée par un dispositif de fermeture (11A, 11B, 11C) à une première extrémité des tubes de transport d'amenée (7A, 7B, 7C), la distance (L) entre le dispositif d'aspiration (24) et le dispositif de fermeture (11A, 11B, 11C) représentant un tiers à deux tiers de la longueur du conduit de remplissage (20),
(III)un ou plusieurs dispositifs d'extraction (8A, 8B, 8C), tous reliés au tube principal de transport (17) par un dispositif de fermeture (18A, 18B, 18C) respectif,
(IV) un conduit secondaire (4) de transport de gaz raccordé en parallèle au tube principal de transport (17) et aux tubes de transport d'amenée (7A, 7B, 7C) et relié par plusieurs conduits de raccordement (5) au tube principal de transport (17) et aux tubes de transport d'amenée (7A, 7B, 7C),
(V) un dispositif aspirant de transport (3) qui est relié au moyen de dispositifs de fermeture (10A, 10B, 10C) à la deuxième extrémité de chacun des tubes de transport d'amenée (7A, 7B, 7C),
(VI) un dispositif (16) de transport sous pression qui est relié à la première extrémité des tubes de transport d'amenée (7A, 7B, 7C) au moyen de dispositifs de fermeture (12A, 12B, 12C), au conduit secondaire (4) de gaz de transport au moyen d'un dispositif de fermeture (13) et à la première extrémité du tube principal de transport (17) au moyen d'un dispositif de fermeture (14), et
(VII)des dispositifs de fermeture prévus dans les conduits de raccordement.

5. Procédé de transport de matière en fines particules en vrac par recours à un dispositif selon l'une des revendications 1 à 4, **caractérisé en ce qu'**il comprend les étapes qui consistent à :
(a) relier le conduit de remplissage (20) à un récipient (30) de matière en vrac au moyen du dispositif de raccordement (21) et ouvrir un dispositif de fermeture (22),
(b) ouvrir le dispositif aspirant (24),
(c) ouvrir les dispositifs de fermeture (11) et (10),
(d) aspirer la matière en vrac depuis le conduit de remplissage (20) jusque dans le premier tronçon (2a) du tube de transport (2) au moyen du dispositif aspirant de transport (3),
(e) fermer les dispositifs de fermeture (11) et (10),
(f) ouvrir les dispositifs de fermeture (12) et (15),
(g) transporter la matière en vrac aspirée à l'étape (d) et située dans le premier tronçon (2a) du tube de transport (2) jusque dans le deuxième tronçon (2b) du tube de transport (2) au moyen du dispositif (16) de transport sous pression et
(h) fermer les dispositifs de fermeture (12) et (15).

6. Procédé de transport de fibres de verre par recours à un dispositif selon l'une des revendications 1 à 4, **caractérisé en ce qu'**il comprend les étapes qui consistent à :
(a) transporter les fibres de verre dans un récipient (30) à matière en vrac,
(b) relier le conduit de remplissage (20) à un récipient (30) de matière en vrac au moyen du dispositif de raccordement (21) et ouvrir un dispositif de fermeture (22),
(c) ouvrir le dispositif aspirant (24),
(d) ouvrir les dispositifs de fermeture (11) et (10),
(e) aspirer la matière en vrac depuis le conduit de remplissage (20) jusque dans le premier tronçon (2a) du tube de transport (2) au moyen du dispositif aspirant de transport (3),
(f) fermer les dispositifs de fermeture (11) et (10),
(g) ouvrir les dispositifs de fermeture (12) et (15),
(h) transporter la matière en vrac aspirée à l'étape (d) et située dans le premier tronçon (2a) du tube de transport (2) jusque dans le deuxième tronçon (2b) du tube de transport (2) au moyen du dispositif (16) de transport sous pression et
(i) fermer les dispositifs de fermeture (12) et (15).
